Europäisches Patentamt

European Patent Office

Office européen des brevets

(19)

(11) Numéro de publication: **0 171 303 B1**

(12) **FASCICULE DE BREVET EUROPEEN**

(45) Date de publication de fascicule du brevet:
21.11.91

(51) Int. Cl.5: **G05D 1/02, B25J 13/08**

(21) Numéro de dépôt: **85401262.2**

(22) Date de dépôt: **24.06.85**

(54) **Procédé de commande des mouvements d'un mobile sensible et actif par rapport à un environnement local passif, à l'aide de capteurs proximétriques locaux.**

(30) Priorité: **27.06.84 FR 8410156**

(43) Date de publication de la demande:
**12.02.86 Bulletin 86/07**

(45) Mention de la délivrance du brevet:
**21.11.91 Bulletin 91/47**

(84) Etats contractants désignés:
**DE FR GB IT SE**

(56) Documents cités:
**EP-A- 0 032 393**
**DE-A- 2 241 682**
**DE-A- 3 113 086**
**DE-A- 3 242 256**
**FR-A- 2 255 651**

**LE NOUVEL AUTOMATISME, vol. 23, no. 11, novembre 1978, pages 315-327, Paris, FR; M. FERRETTI: "Le dossier de la robotique industrielle: vers la génération 3"**

(73) Titulaire: **COMMISSARIAT A L'ENERGIE ATO-MIQUE Etablissement de Caractère Scientifique Technique et Industriel**
**31/33, rue de la Fédération**
**F-75015 Paris(FR)**

Titulaire: **INRIA INSTITUT NATIONAL DE RE-CHERCHE EN INFORMATIQUE ET EN AUTO-MATIQUE**
**Domaine de Voluceau**
**Rocquencourt F-78150 Le Chesnay(FR)**

(72) Inventeur: **Andre, Guy**
**76, rue Alphonse Guerin**
**F-35000 Rennes(FR)**
Inventeur: **L'autre inventeur a renoncé à sa désignation**

(74) Mandataire: **Mongrédien, André et al**
**c/o BREVATOME 25, rue de Ponthieu**
**F-75008 Paris(FR)**

## Description

La présente invention a pour objet un procédé de commande des mouvements d'un mobile sensible et actif par rapport à un environnement local passif, à l'aide de capteurs proximétriques locaux. Elle est relative au domaine de la robotique.

Par l'expression "mobile sensible et actif", on désigne tout mobile équipé de capteurs proximétriques externes sensibles à la présence d'objets dans l'environnement local du mobile, celui-ci étant en outre équipé d'actionneurs aptes à déplacer le mobile à l'intérieur de cet environnement, afin d'accomplir une tâche programmée ou commandée à distance, tout en prenant en compte à tout instant les objets situés dans l'environnement local du mobile. Ainsi, l'invention s'applique indifféremment et à titre d'exemples non limitatifs à une pince de préhenseur robotisée, à un véhicule d'intervention en milieu hostile ou inaccessible à l'homme, etc...

Ces mobiles sensibles et actifs peuvent être également équipés de capteurs internes, sensibles notamment aux influences du milieu et de la charge utile transportée. Ces capteurs peuvent être des capteurs de position, de vitesse, de couple ou de force.

La présente invention concerne essentiellement la commande des mouvements d'un mobile à l'aide des informations délivrées par les capteurs externes, la prise en compte des informations délivrées par les capteurs internes s'effectuant par ailleurs de façon connue, et ne faisant pas partie de l'invention. Dans la suite de la description, le mot "capteur" désigne donc exclusivement les capteurs externes du mobile.

Dans l'état actuel de la technique, la commande des mobiles sensibles et actifs à l'intérieur d'un environnement donné suppose soit la matérialisation spécifique de cet environnement (c'est le cas par exemple d'un véhicule suivant une ligne tracée sur le sol ou d'un mobile flacé dans un environnement connu, matérialisé par des surfaces réflechissantes, flaues, verticales et perpendiculaires entre elles, comme l'illustre le document DE-A-3 113 086), soit une modélisation exhaustive de cet environement.

Le premier cas est évidemment inapplicable lorsque l'environnement est inaccessible et de façon plus générale, lorsque la trajectoire à suivre ne peut être prévue à l'avance. De plus, il impose une fois pour toutes la trajectoire, ce qui le rend inadapté dés que l'environnement est évolutif.

Dans le cas où il réalise une modélisation exhaustive de l'environnement, le mobile doit être équipé d'un calculateur effectuant des opérations nécessairement complexes, le modèle de l'environnement évoluant au fur et à mesure du déplacement du mobile à l'intérieur de celui-ci.

Par ailleurs, dans des cas particuliers tels que le maintien d'un véhicule en déplacement à une distance constante de la surface d'un objet ou que l'asservissement d'un véhicule à se déplacer à la même vitesse qu'un autre véhicule sur une trajectoire parallèle, on sait réaliser des boucles d'asservissement résolvant ces problèmes bien spécifiques. Cette situation est illustrée notamment par les documents EP-A-0 032 393 et DE-A-2 241 682.

Toutefois, ces solutions très spécifiques ne sont pas transposables au cas général d'un mobile snsible et actif évoluant dans un environnement inconnu à l'avance et éventuellement évolutif, selon un ou plusieurs modes de fonctionnement adaptés à la tâche à réaliser, sans autre limitation dans ces modes que la présence des capteurs fournissant les informations nécessaires à leur réalisation.

Par "modes de fonctionnement", on entend ici toute fonction élémentaire remplie par le mobile. De ce point de vue, l'asservissement d'un véhicule à rester à une distance constante de la surface d'un objet constitue un mode de fonctionnement. De façon comparable, l'asservissement d'un véhicule à se déplacer parallèlement à la trajectoire d'un autre véhicule et à la même vitesse définit deux modes de fonctionnement. Un mode de fonctionnement d'un autre type est le centrage de la pince d'un préhenseur par rapport à un objet à saisir.

Il est généralement possible de concevoir un mobile sensible et actif équipé de capteurs reliés à des actionneurs par des boucles d'asservissement assurant les modes de fonctionnements propres à une tâche particulière à accomplir. Cependant, la complexité des boucles d'asservissement devient rapidement très grande avec la multiplication des modes de fonctionnement. De plus, l'ajout d'un mode de fonctionnement supplémentaire à un système existant remet en cause l'ensemble de ce système.

L'invention a précisément pour objet un nouveau procédé de commande permettant, en utilisant des capteurs d'un type particulier, d'élaborer à partir des signaux délivrés par les capteurs concernés par un mode de fonctionnement donné, un ordre de commande des actionneurs mis en oeuvre dans ce mode de fonctionnement, sans avoir recours à une matérialisation et/ou à une modélisation de l'environnement.

Un autre but de l'invention est la réalisation d'un système modulaire dans lequel des capteurs peuvent être ajoutés ou retirés sur un mobile existant sans que l'ensemble du système soit remis en cause.

A cet effet, il est proposé conformément à l'invention un procédé de commande des mouvements d'un mobile sensible et actif, réalisé conformément à la revendication 1.

Dans le procédé de commande ainsi défini, les observations suivantes peuvent être faites :

- les capteurs proximétriques directionnels peuvent être soit des capteurs fournissant directement un signal proximétrique (capteurs infrarouges, optiques ultrasonores à courants de Foucault, etc...) soit des capteurs plus complexes, tels que des imageurs, à partir desquels peut être obtenu après traitement un signal proximétrique directionnel ;

- les coefficients $m_i$ sont appelés "masses virtuelles de pondération" car le comportement obtenu est alors analogue à celui d'un système mécanique virtuel formé des masses ponctuelles $m_i$ rigidement reliées par des barres sans masse ;

- l'origine $M_i$ des capteurs est déterminée par l'homme du métier, par exemple en fonction de la nature des capteurs, de l'allure de leur signal de sortie et du type d'action que l'on désire assurer ; il peut s'agir par exemple de l'origine de la fonction f(x) dérivée de la réponse du capteur (par exemple x = 0), ou du point milieu entre l'émetteur et le récepteur constituant le capteur.

- la fonction f(x) correspond dans la pratique à la réponse du capteur correspondant, après que cette réponse ait été traitée, afin notamment d'en extraire le bruit de fond et de la linéariser.

On observera en outre que le procédé selon l'invention s'applique séparément à chacun des modes de fonctionnement du mobile, lorsque celui-ci en comporte plusieurs. Cela signifie notamment qu'un même capteur peut intervenir simultanément dans le cadre de plusieurs modes de fonctionnement du mobile, le coefficient $m_i$ et l'action vectorielle $\vec{A}_i$ qui lui sont affectés dans chacun de ces modes pouvant être différents.

En d'autres termes, sur un mobile équipé de capteurs relativement nombreux, chacun des modes de fonctionnement fait intervenir au moins deux de ces capteurs, auxquels il affecte des masses virtuelles de pondération $m_i$ permettant, à partir des fonctions f(x) dérivées des réponses de ces capteurs, de déterminer des actions élémentaires virtuelles correspondant à un déplacement, à une vitesse, à une accélération ou à une force. Pour le mode de fonctionnement considéré, ces actions élémentaires permettent d'obtenir, par exemple dans certains cas très simples par sommation, un ordre de commande des actionneurs définissant un comportement du mobile vis-à-vis de son environnement. Ce comportement peut être réalisé seul ou superposé à des actions en cours ou préalablement commandées. L'ordre de commande se présente sous la forme d'un torseur dont le sommet coïncide avec le sommet du repère de commande associé aux actionneurs susceptibles d'intervenir dans ce mode de fonctionnement. On réalise ainsi la commande coordonnée du mobile, sans passer par la modélisation de l'environnement.

Chacun des modes de fonctionnement du mobile est déterminé par un algorithme qui ne fait pas partie de l'invention. C'est cet algorithme qui détermine les capteurs concernés par le mode, les masses virtuelles $m_i$ affectées à ces capteurs et les opérations à effectuer à partir des actions élémentaires virtuelles affectées aux capteurs, pour élaborer l'ordre de commande.

Les coefficients $m_i$ représentent d'une façon générale l'importance relative affectée à chaque capteur pour un mode de fonctionnement donné. Dans le cas où le torseur de commande est dynamique, c'est-à-dire lorsque les grandeurs de commande sont des forces et des couples exprimés dans le repère de commande $R_N$, il suffit alors pour obtenir cette commande de calculer les éléments de réduction en 0 du torseur associé aux actions élémentaires $\vec{A}_i$ appliquées aux masses $m_i$ :

$$\begin{cases} \sum m_i . \vec{A}_i \\ \sum m_i . \vec{A}_i \quad \wedge \quad \vec{OM}_i \end{cases}$$

où $\wedge$ désigne le produit vectoriel.

Si la commande du système est effectuée en vitesse (cinématique) et si les $\vec{A}_i$ représentent les vitesses désirées pour chaque masse $m_i$, le torseur ci-dessus est également utilisable.

Dans les deux cas, les meilleurs résultats seront obtenus lorsque le repère de commande coïncidera avec le repère principal d'inertie des masses $m_i$, o'est-à-dire le repère dans lequel le torseur ou la matrice d'inertie est diagonale et dont l'origine est le centre de gravité des masses $m_i$. Alors, le découplage sera maximal en dynamique et les vitesses élémentaires obtenues pour les points $M_i$, dans le cas cinématique, seront les plus proches de celles désirées.

Dans deux réalisations particulièrement intéressantes de l'invention, déterminées par le choix de capteurs de types particuliers, la fonction f(x) peut être soit une fonction monotone de la distance, toujours positive ou négative, correspondant à une attraction ou à une répulsion, soit une fonction changeant de signe pour une distance x donnée correspondant à un asservissement de distance. Pour un mode de fonctionnement donné, la fonction f(x) est de préférence la même pour chacun des capteurs.

Par ailleurs, la direction des actions élémentaires $A_i$ est, de préférence soit confondue avec la direction de détection des capteurs correspondants, soit perpendiculaire à cette direction. Ici encore, pour un mode de fonctionnement donné, les directions des actions A$_i$ concernées sont de préférence, les mêmes.

L'invention sera mieux comprise à l'aide de la description suivante de diverses applications.

On se reportera au dessin annexé, sur lequel :
- la figure 1 est un schéma de principe d'un capteur proximétrique utilisable dans le cadre de l'invention,
- la figure 2 représente schématiquement comment équiper de capteurs proximétriques un véhicule mobile sur un sol pour pouvoir le commander grâce au procédé selon l'invention,
- la figure 3 représente un exemple de trajectoire suivie par le véhicule mobile équipé comme représenté sur la figure 2,
- la figure 4 illustre l'application de l'invention à un véhicule mobile dans un espace à trois dimensions,
- la figure 5 illustre l'application de l'invention à un préhenseur de manipulateur, et
- les figures 6 à 9 illustrent l'application de l'invention à d'autres commandes effectuées dans un espace à trois dimensions.

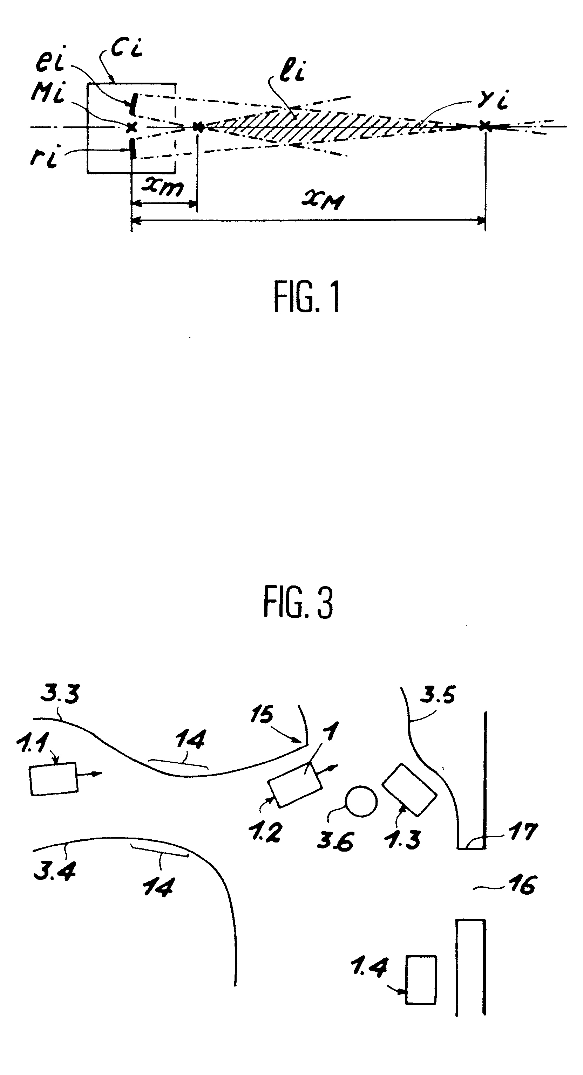

La figure 1 est un schéma de principe d'un capteur proximétrique local C$_i$ utilisable selon l'invention. Il comprend une surface d'émission e$_i$, par exemple ultrasonique ou lumineuse, et une surface de réception r$_i$ recevant un signal de retour d'une cible, par exemple l'ultrason réfléchi ou la lumière diffusée par cette cible. L'intersection des champs coniques angulaires d'émission et de réception des surfaces e$_i$ et r$_i$ définit un lobe l$_i$, marqué par des hachures sur la figure 1, dont l'axe Y$_i$ est donc la direction de détection du capteur. On choisit par exemple pour origine M$_i$ du capteur, le point de l'axe Y$_i$ situé entre les surfaces d'émission e$_i$ et de réception r$_i$. De façon connue, le capteur a une portée minimale x$_m$, et une portée maximale x$_M$.

A partir du signal fourni par des capteurs proximétriques et directionnels de ce type (ou de capteurs analogues), le procédé selon l'invention permet de commander un comportement d'un mobile selon un ou plusieurs modes de fonctionnement donné, par rapport à l'environnement local du mobile, c'est-à-dire dans les limites de portée des capteurs.

Dans ce but, on affecte à chaque capteur C$_i$ un coefficient m$_i$ constituant une masse virtuelle de pondération de l'action de ce capteur. On affecte ensuite à ce capteur, pour le mode de fonctionnement concerné, une action élémentaire virtuelle se présentant par exemple sous la forme d'une force f=m$_i$f(x), f(x) étant dérivée directement de la réponse du capteur lorsqu'un objet se trouve à la distance x, après traitement visant à éliminer le bruit de fond et, par exemple, à linéariser le signal.

Cette fonction f(x) peut notamment être de la forme $\frac{1}{x}$ ou $\frac{1}{x^2}$. La force f est appliquée à l'origine M$_i$ du capteur et selon une direction confondue avec la direction de détection du capteur ou perpendiculaire à celle-ci.

Dans la pratique, les dimensions géométriques des éléments des capteurs ont des valeurs si faibles par rapport aux valeurs des dimensions du mobile ou de l'environnement, que l'on peut, pour la mise en oeuvre de l'invention, admettre l'approximation de considérer que l'origine M$_i$ d'un capteur C$_i$ est confondu avec un point central de l'emplacement physique du capteur monté sur le mobile.

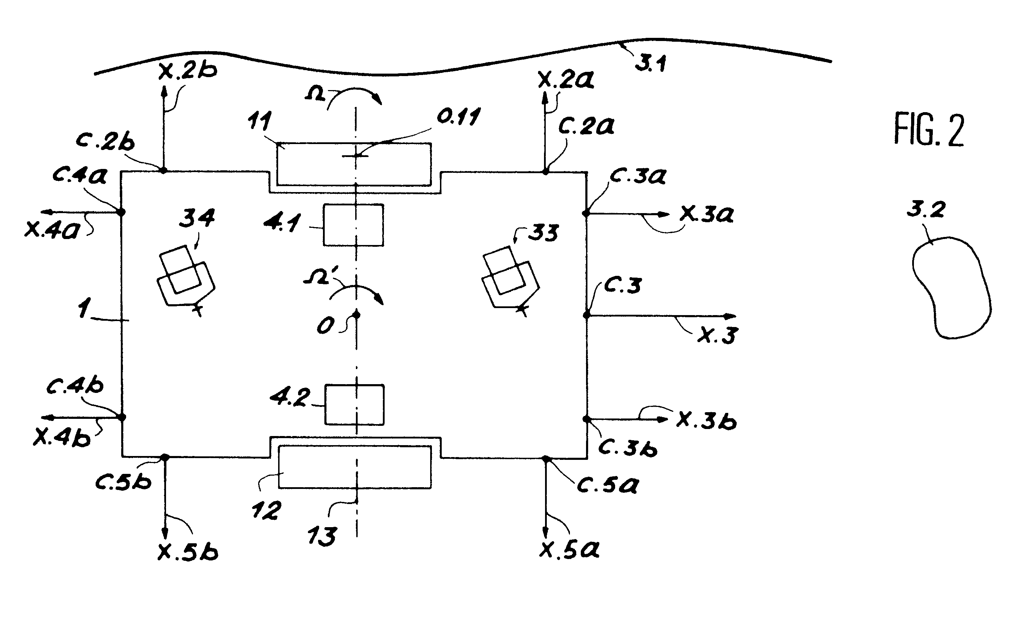

On a représenté schématiquement sur la figure 2 un véhicule mobile 1 se déplaçant sur une surface, le sol par exemple, et comportant deux degrés de liberté au sol matérialisés par deux roues 11 et 12 commandées par les actionneurs respectifs 4.1 et 4.2, ces deux roues étant portées par un seul essieu 13. Des roues folles 33 et 34 assurent la stabilité de ce véhicule dont on trouve des formes pratiques de réalisation comme chariot filoguidé, comme fauteil motorisé pour handicapés, ou encore comme certaines voiturettes électriques.

On notera que les véhicules des genres précédemment cités comportent généralement l'essieu 13 vers l'arrière, alors que la figure 2 présente une position symétrique de l'essieu, pour la clarté des explications. On notera également que ce véhicule 1 est strictement équivalent à un véhicule comportant deux chenilles sur les faces latérales, à ceci près que ces chenilles entraînent lors d'une rotation à vitesse différente des frottements importants évités ici par les roues folles 33 et 34.

Si l'on considère le véhicule 1 à l'arrêt au voisinage d'une paroi 3.1, on voit que tout mouvement de la seule roue 12 entraîne un pivotement du véhicule autour du point de contact 0.11 avec le sol de la roue 11, ou du centre de contact de la chenille gauche du véhicule. On voit donc que toute action différentielle entre la roue 12 et la roue 11 peut être ramenée au sommet (0,11 par exemple) d'un torseur cinématique autour duquel s'effectue une rotation du véhicule.

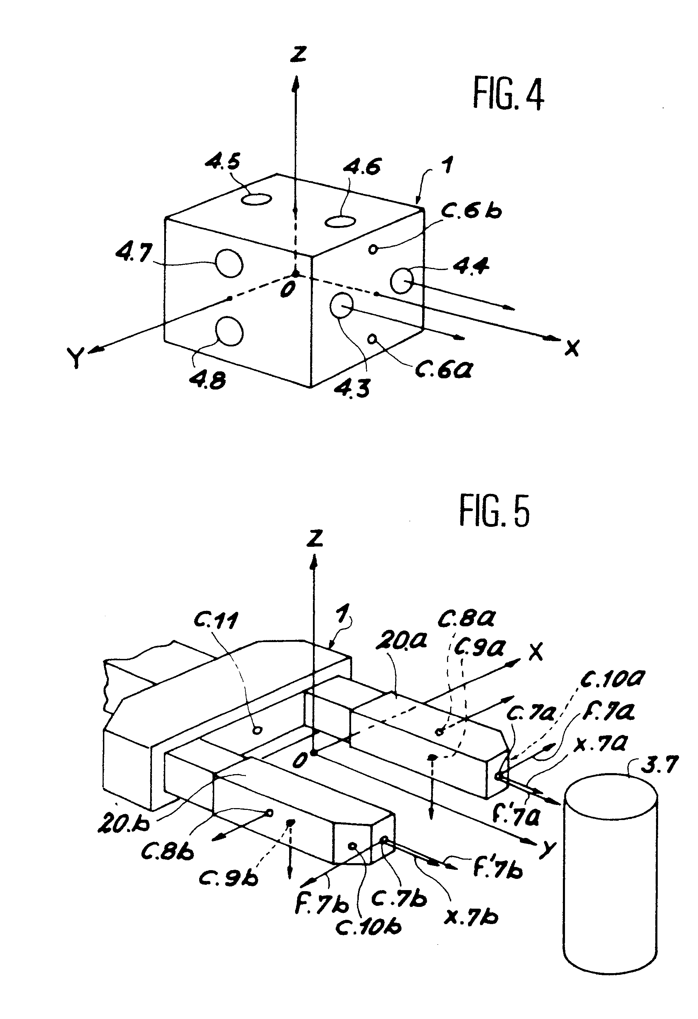

Selon l'invention, ce véhicule a été équipé sur sa face gauche (en haut sur la figure 3) de deux capteurs proximétriques C.2a et C.2b disposés ici symétriquement par rapport à l'essieu 13.

Conformément à l'invention on associe aux signaux X.2a et X.2b en provenance des deux capteurs C.2a et C.2b des actions élémentaires virtuelles colinéaires à la direction de détection, appliquées à l'origine des capteurs correspondant et dont le module est donné par la relation A = m.f(x), où m est une coefficient affecté au capteur correspondant et où f(x) correspond à X.2a et à X.2b, pour les capteurs C.2a et C.2b.

Dans le cas représenté sur la figure 2, les capteurs C.2a et C.2b sont disposés de façon symétrique par rapport au centre 0.11 du repère de commande de l'actionneur 4.2, seul pris en compte dans ce mode de fonctionnement. Les coefficients m associés aux capteurs sont par conséquent, identiques, de sorte que les actions élémentaires virtuelles correspondent pratiquement aux réponses des capteurs C.2a et C.2b.

Lorsque les actions élémentaires virtuelles sont différentes, on détermine à partir de leur différence un ordre de rotation $\Omega$ autour du point 0.11. Cette rotation $\Omega$ est obtenue au niveau des actionneurs sous forme d'un déplacement différentiel de la roue 12 par rapport à la roue 11, que ceci soit considéré en déplacement à l'arrêt, en force ou en superposition avec une vitesse de croisière du véhicule. Dans ce mode de fonctionnement, on réalise donc une action dite de "dégauchissage" au sens où, en agissant par l'intermédiaire de la commande de façon à égaliser les actions A.2a et A.2b, on tend à rendre la face gauche du véhicule parallèle à la corde correspondante de la surface à suivre de la paroi 3.1.

En d'autres termes, en combinant les deux actions élémentaires A.2a et A.2b afin d'asservir à des distances fixées les deux capteurs C.2a et C.2b, on obtient une action combinée de dégauchissage sous forme du pivotement $\Omega$.

Si on équipe le véhicule 1 de deux capteurs C.3a et C.3b regardant vers l'avant, on peut introduire un nouveau mode de fonctionnement de ce véhicule. Selon ce nouveau mode, toute différence entre les signaux X.3a et X.3b en provenance des deux capteurs C.3a et C.3b permet de commander une action de centrage sur un objet 3.2. A cet effet, l'action élémentaire associée à chacun des deux capteurs C.3a et C.3b n'est plus colinéaire à la direction de détection mais sensiblement perpendiculaire. La différence entre ces deux actions élémentaires virtuelles opposées permet d'engendrer un ordre de rotation du véhicule.

Il peut paraître cette fois plus opportun de considérer l'effet différentiel des deux roues 11 et 12 non plus par rapport au point 0.11 de contact de la roue 11 avec le sol, mais autour du centre 0 de l'essieu 13, pris comme sommet du repère de commande des actionneurs 4.1 et 4.2. Ici encore, les coefficients m associés aux capteurs C.3a et C.3b sont les mêmes. La différence entre les actions élémentaires virtuelles associées aux capteurs C.3a et C.3b permet donc de commander une rotation $\Omega'$ autour du point 0, que ce soit à l'arrêt ou en superposition au parcours d'une trajectoire préétablie du mobile 2.

Dans un premier mode, si l'objet figuré en 3.2 devant le véhicule 1 est considéré comme une cible, les sens des actions élémentaires seront opposés, de façon à centrer le véhicule sur l'objet 3.2. Si, dans un autre mode, cet objet 3.2 est considéré comme un obstacle, les sens des actions élémentaires seront identiques afin de commander une trajectoire de contournement initialisée du côté du signal le plus fort.

On conçoit que les actions de caractère colinéaire ou de caractère perpendiculaire peuvent être commutées et que le même jeu de capteurs peut se voir affecter des actions élémentaires différentes selon les circonstances et les modes de fonctionnement choisis.

On comprend également que, lors d'un mode de fonctionnement en centrage, on peut simultanément, à l'aide des mêmes capteurs C.3a et C.3b, superposer un mode de fonctionnement en asservissement de distance et, de ce fait, réaliser l'arrêt du véhicule à la distance voulue d'une cible, ou la poursuite de cette cible si celle-ci est mobile, dans la mesure où les limites de capacité de vitesse des deux mobiles sont compatibles.

Le choix du repère de travail dans lequel seront résolues les combinaisons des actions élémentaires associées à chaque capteur est libre. Toutefois, selon que ce choix est porté dans le cas présent sur un repère de sommet 0.11 ou 0, un changement de coordonnées doit éventuellement être exécuté pour faire coïncider les actions demandées par les capteurs et qui peuvent effectivement être réalisées par les combinaisons des actionneurs.

On précise bien ainsi l'avantage essentiel de l'invention qui permet, en choisissant les localisations des capteurs et leur nombre ainsi que leur coefficient $m_i$ de conduire à optimiser les ordres de commande que l'on associe aux capteurs, de façon à ce qu'ils correspondent au mieux à la commande effective permise par les actionneurs.

Dans les exemples décrits jusqu'à présent, on peut arriver à une commande quasiment directe. Toutefois, comme on le verra plus loin, ce cas est exceptionnel.

La figure 2 permet encore d'illustrer un cas beaucoup plus complexe concernant un mobile 1 pouvant être le préhenseur d'un robot actif par les mouvements d'un bras articulé qui le porte. Dans ces conditions, on voit bien que les capteurs C.2a et C.2b permettent de réaliser un comportement de suivi de la paroi 3.1 utilisant l'action de dégauchissage, pendant que les capteurs frontaux C.3a et C.3b réalisent soit l'évitement de l'obstacle 3.2, soit le centrage et/ou l'arrêt à distance fixée par rapport à cet obstacle. On note que le seul capteur C.2a permet de suivre la paroi 3.1 lorsqu'on se dirige vers la droite sur la figure 1 mais ne permet pas cette fonction dans le sens opposé, ce que permet le capteur C.2b, et que l'action combinée des deux capteurs C.2a et C.2b est donc sans polarité. On notera de même que les capteurs C.3a et C.3b n'exercent leurs fonctions que vers l'avant du véhicule 1 et qu'un fonctionnement omnidirectionnel nécessite l'équipement du même véhicule par des capteurs arrière C.4a et C.4b fournissant des signaux proximétriques X.4a et X.4b. Par symétrie, des capteurs latéraux C.5a et C.5b fournissant des signaux proximétriques X.5a et X.5b peuvent compléter la symétrie du montage des capteurs, permettant ainsi la commande la plus complète.

On peut considérer que les actions associées aux capteurs latéraux ou frontaux, lors du mode de fonctionnement en évitement d'obstacles, conduisent à transmettre aux actionneurs un ordre de commande de pivotement $\Omega' = k(V_{11}-V_{12})$ et un ordre de commande de vitesse longitudinale $S = k'(v_{11}+v_{12})$, $V_{11}$ et $V_{12}$ étant les vitesses des roues 11 et 12, respectivement, et k et k' étant des coefficients variant avec l'amplitude des actions à effectuer.

Conformément à l'invention, ces ordres de commande sont obtenus en appliquant au point 0 constituant le sommet du repère de travail ou de commande, les actions $\Sigma m_i \, \vec{A}_i$ et $\Sigma m_i \, \overrightarrow{OM}_i \wedge \vec{A}_i$, $m_i$ étant le coefficient ou masse virtuelle affecté au capteur $C_i$, $\vec{A}_i$ étant l'action associée à ce même capteur $C_i$, exprimée ici en termes de vitesse, et $M_i$ étant l'origine du capteur $C_i$. Si nécessaire, les ordres de commande des actionneurs peuvent avoir été explicités à cet effet par un dispositif de commande utilisant un changement de coordonnées.

On verra maintenant sur la figure 3 comment le procédé de commande selon l'invention et les différents modes de fonctionnement qui peuvent lui être appliqués constituent une solution d'une grande flexibilité lors d'un déplacement du mobile 1 de la figure 2 dans un environnement complexe.

Sur cette figure 3, on voit la position initiale 1.1 du véhicule 1, à gauche, entre les parois 3.3 et 3.4 constituant des obstacles et présentant en particulier une zone de rétrécissement 14. Le véhicule, étant supposé se déplacer selon un mode de suivi parallèle de la paroi gauche 3.3, va détecter en approchant la zone de rétrécissement 14 l'apparition de la paroi 3.4 à sa droite et peut, en vérifiant les signaux de ses capteurs avant et arrière, s'assurer qu'une consigne plus serrée sur les données à ne pas dépasser en distance latérale permet de traverser ce rétrécissement. Cette opération met en oeuvre au moins un mode de fonctionnement superposé au précédent, dans lequel la paroi droite 3.4 constitue un obstacle à éviter.

Si le rétrécissement 14 est trop étroit, le véhicule ne peut pas passer et peut effectuer un demi-tour ou un retrait en marche arrière, conformément à une consigne établie à l'avance.

Si, au contraire, on suppose que le véhicule a franchi la zone de rétrécissement 14, le véhicule peut ensuite être commandé soit pour suivre la paroi droite 3.4, soit la gauche 3.3 selon le mode de fonctionnement choisi. Dans cette dernière hypothèse, s'il arrive à l'angle 15 en position 1.2, le véhicule 1 va percevoir une variation brutale du signal du capteur avant gauche C.2a (figure 2). Ce type de situation doit être transmis à l'opérateur, ou à un niveau supérieur de commande, lequel peut constater que la présence à l'avant du véhicule d'une paroi 3.5 détectée par un signal frontal, laisse le choix soit de tourner à gauche, soit de sauter la discontinuité 3.3-3.5 et de suivre ensuite la paroi 3.5. Dans ce dernier cas, la présence d'un obstacle 3.6 peut être prise en compte afin que le véhicule contourne cet obstacle par le meilleur côté. Enfin, le véhicule parvenu dans la position 1.3 peut savoir, de par l'ordre de l'opérateur ou la connaissance de son environnement, que la discontinuité de paroi 16 est une porte. Selon les ordres déterminés par les modes de fonctionnement préétablis ou choisis par l'opérateur, le véhicule peut suivre directement l'angle d'entrée de cette porte 17, ou bien passer devant cette porte en poursuivant sa trajectoire vers la position 1.4.

Il apparaît ainsi que le procédé de commande selon l'invention permet de créer une fonction de comportement "évitement d'obstacle frontal suivi de paroi" qui ne nécessite pas que soient précisés la forme et/ou le déplacement de ces obstacles. Seules des variations brusques dont l'ampleur dépasse la portée des capteurs proximétriques portés par le véhicule, telles que les angles 15 et 17 et l'ouverture 16, échappent à la commande selon l'invention.

La nature de ces variations brusques doit donc être connue par avance afin de permettre de réaliser des tâches complexes et de donner des éléments de décision sur ce point à un opérateur qui télécommande le véhicule, ou à un système décisionnel autonome. C'est ainsi que, pour décrire au véhicule 1 en position initiale 1.1, la tâche consistant à pénétrer par la porte 16 en évitant tous les accidents fixes ou mobiles du parcours, il suffit de signaler que l'angle à gauche 15 ne doit pas être suivi et qu'il faut poursuivre le suivi de la même paroi pour tourner à gauche à la seconde discontinuité.

On voit ainsi apparaître un avantage essentiel de l'invention, dont le procédé de commande permet d'assurer un positionnement précis d'un mobile dans son environnement local, ou encore une "auto-adaptation" du mobile à cet environnement local, l'environnement complet dans lequel doit évoluer le mobile n'étant connu que dans ses grandes lignes (discontinuités importantes par exemple) sous la forme d'un "modèle flou". Ce modèle flou n'a bien entendu rien de commun avec la modélisation exhaustive de l'environnement effectuée généralement dans l'art antérieur.

Les coefficients ou masses fictives de pondération $m_i$ affectées aux différents capteurs $C_i$ concernés par chacun des modes de fonctionnement du mobile sont choisis de façon à placer leur centre de gravité défini par la relation $\Sigma m_i \cdot \overrightarrow{OM_i}$ sur un des axes du repère sur le mobile de son torseur de vitesse sur la figure 2, cette caractéristique s'applique aux paires de capteurs C.3a-C.3b, C.2a-C.2b, et pour les paires suivantes. De plus, le mobile 1 étant muni de tous ces capteurs $C_i$, les axes principaux d'inertie correspondant aux coefficients ou masses fictives de pondération $m_i$ des actions de chaque capteur coïncident avec les axes du repère de commande de sommet 0 lié aux actionneurs du mobile 1.

La figure 4 représente un mobile 1, schématisé sous une forme cubique, flottant dans le milieu constituant son environnement. Cette situation correspond à celle d'un mobile qui flotte dans un liquide de même densité et présente alors de plus une position indifférente (centre de gravité coïncidant avec le centre de flottabilité). Cette situation correspond aussi à un mobile en situation de non gravité sur une orbite et non propulsé dans l'espace, en prenant comme repère un repère lié à cette orbite.

En supposant par exemple qu'il s'agit d'un engin sous-marin, on a représenté sur la figure 4 un mobile présentant une mobilité à six degrés de liberté. Cette mobilité est obtenue à l'aide de deux propulseurs sous tunnel 4.3 et 4.4 agissant selon un axe principal OX, deux propulseurs similaires 4.5 et 4.6 assurant la propulsion selon un axe OZ, et enfin deux propulseurs 4.7 et 4.8 assurant la mobilité selon un axe OY, les axes OX, OY et OZ étant orthogonaux entre eux. On voit que ce véhicule peut être propulsé par un vecteur force selon OX pour des poussées égales des deux propulseurs 4.3 et 4.4, et peut effectuer une rotation pure autour de OZ pour des poussées opposées de ces mêmes propulseurs, et ainsi de suite pour les trois axes. On a donc un mobile dont les combinaisons d'actions des propulseurs offrent directement une forme cartésienne du torseur des efforts centrés sur son centre de gravité O, dans le repère OXYZ.

Selon l'invention, des capteurs proximétriques dont la détection s'effectue dans l'axe de chacun des propulseurs sont placés sur le mobile. On affecte ensuite à chaque capteur une action virtuelle sous la forme d'une force opposée à la réponse du capteur, de la forme $f = \frac{m}{x^2}$, ou une fonction similaire. A partir de ces actions virtuelles, on détermine des ordres de commande correspondant à un comportement qui selon le signe des forces colinéaires aux directions de détection des capteurs (déterminé par le ou les modes de fonctionnement choisis) permet en même temps de réaliser tout évitement d'obstacle sur chacune des faces concernées et tout suivi parallèle à des surfaces, sur chacune de ses faces.

De préférence, on place au minimum quatre capteurs par face, les capteurs dont les directions de détection ne sont pas confondues avec les axes des propulseurs se voient alors affecter des actions perpendiculaires à ces directions et assurent la commande des propulseurs de la face adjacente. Ainsi, deux capteurs C.6a et C.6b, montés sur la face avant droite dans l'axe OX, peuvent être utilisés pour déterminer des ordres de commande des propulseurs 4.5 et 4.6, et ainsi de suite.

La représentation très schématique de la figure 4 permet de comprendre que l'ellipsoïde d'inertie associée aux masses fictives $m_i$ affectées à chaque capteur est centrée sur le sommet O du repère de commande OXYZ associé aux actionneurs.

On conçoit également que le véhicule de la figure 4 est aveugle hors du champ de ses différents capteurs. L'adjonction de capteurs dans des plans diagonaux peut compléter sa capacité de détecter des obstacles dant tout l'angle solide qui l'entoure. Une commande locale utilisant les proximètres implantés sur le mobile peut ainsi être réalisée, au moyen de toutes combinaisons utiles d'actions susceptibles d'engendrer un comportement autoadaptatif d'évitement d'obstacle, et/ou de dégauchissage (suivi parallèlement à une surface, ou tout suivi de cible en toute direction).

Les différents exemples précédents ont illustré des formes élémentaires d'applications de l'invention. Celle-ci sera pleinement comprise à l'aide de la figure suivante 5.

Cette figure 5 représente un objet mobile 1, qui est ici le préhenseur d'un manipulateur dont on ne voit que l'extrémité du poignet, équipé selon l'invention de capteurs proximétriques destinés à réaliser une commande en boucle fermée vis-à-vis des différents objets entourant ce préhenseur mobile, lesdits capteurs proximétriques étant par exemple des proximètres à émission infrarouge. Ces proximètres émettent un pinceau de lumière plus ou moins étroit, selon les types, et lorsque cette lumière rencontre une surface à distance suffisamment proche, cette surface renvoie par réflexion et principalement par diffusion une partie de cette lumière sur un photorécepteur très proche de la diode émettrice. Le signal de sortie d'un tel capteur est, par exemple, de la forme $\frac{1}{x^2}$, x étant la distance du capteur à la surface. Cette forme fait songer, bien entendu, à une force de caractère magnétique ou gravitique.

Le préhenseur 1 est équipé, dans le cadre de l'invention, d'un certain nombre de capteurs proximétriques. En particulier, les capteurs proximétriques C.7a et C.7b situés à l'extrémité des doigts 20.a et 20.b du préhenseur visent vers l'avant selon une direction OY, pour délivrer des signaux X.7a et X.7b permettant de détecter un objet 3.7 à saisir.

Dans un premier mode de fonctionnement dit de centrage, on utilise en différentiel les deux signaux X.7a et X.7b provenant des capteurs C.7a et C.7b, les coefficients $m_i$ étant alors identiques, de façon à engendrer un ordre d'actionnement selon une direction OX approximativement perpendiculaire à la direction OY commune de ces deux capteurs. Sur la figure 5, on a représenté ces deux actions dans le cas où l'objet 3.7 est vu plus fortement par le capteur C.7a que par le capteur C.7b, sous la forme des forces respectives f.7a et f.7b approximativement perpendiculaires aux directions de détection des capteurs. On constate que ces deux forces ont une résultante qui tend à faire se déplacer le préhenseur 1 vers sa gauche, c'est-à-dire à exercer une action de centrage vis-à-vis de l'objet 3.7. Cette résultante s'applique dans le plan tangent à l'avant du préhenseur. Le signal différentiel ainsi obtenu constitue un ordre de commande qui est envoyé au système de commande du manipulateur. Ce système de commande déplace alors le préhenseur parallèlement à cette force, ce qui a pour effet d'amener le préhenseur en face de l'objet 3.7 à saisir.

Si l'objet 3.7 est hors de la portée du capteur C.7b, mais seulement dans le champ du capteur C.7a, la force f.7a détermine un ordre de commande tendant à ramener le préhenseur 1 vers cet objet 3.7.

Si l'objet 3.7 est hors de portée des deux capteurs, il n'affecte alors en rien le préhenseur puisqu'aucun ordre de commande n'est émis.

L'action des forces élémentaires associées aux capteurs C.7a et C.7b peut se traduire soit par un déplacement du préhenseur parallèlement à lui-même selon OX, soit par un pivotement du préhenseur autour de l'axe OZ, c'est-à-dire par une variation d'orientation du préhenseur. Par ailleurs, le changement de signe de ces forces élémentaires revient à faire passer l'objet de cible à obstacle et correspond à un mode d'évitement. Le sommet O du repère de commande lié au préhenseur a été volontairement placé ici au centre de la zone active du préhenseur, au milieu des deux doigts 20a et 20b.

Un autre mode de commande, selon le système de commande de l'invention, à partir des deux mêmes capteurs C.7a et C.7b, conduit à affecter à ces capteurs deux forces f'.7a et f'.7b colinéaires cette fois aux directions de détection des capteurs. Ces deux forces engendrent une nouvelle action résultante qui, du fait des réponses différentes des deux capteurs, va tendre à faire pivoter l'ensemble du préhenseur autour de l'axe OZ, ou à faire avancer cet ensemble selon l'axe OY. On conçoit que si la force de commande obtenue à partir des forces f'.7a et f'.7b tend vers 0 et s'inverse de part et d'autre d'une distance prise comme consigne, on tend à asservir le préhenseur à être à une distance donnée de l'objet 3.7 et dans son plan de symétrie vu par les capteurs C.7a et C.7b. La première fonction était une fonction de centrage, la seconde est une fonction d'asservissement de position qui peut être étendue à une fonction de dégauchissage vis-à-vis de la surface observée par les capteurs.

Les actions élémentaires que l'on peut affecter conformément à l'invention aux deux premiers capteurs C.7a et C.7b permettent donc de réaliser une fonction évoluée de centrage et de dégauchissage vis-à-vis de l'objet 3.7, préalable à sa préhension par le préhenseur 1.

Bien entendu, le préhenseur 1 équipé de capteurs selon l'invention peut posséder un comportement plus évolué et, pour autant qu'il recherche sa cible 3.7, doit éviter des obstacles susceptibles de gêner sa recherche. A cet effet, il est équipé d'au moins une paire de capteurs C.8a et C.8b sur les faces latérales externes des doigts 20.a et 20b, et de capteurs C.9a et C.9b placés au-dessous de ces doigts, pour éviter les obstacles latéraux et la surface de la table sur laquelle l'objet 3.7 peut être posé. Le préhenseur 1 est également équipé de capteurs C.10a et C.10b susceptibles d'éviter des obstacles proches de l'objet 3.7 vers l'avant du préhenseur.

Le préhenseur 1 possède encore au moins un capteur C.11 regardant entre les doigts vers l'objet à saisir ; ce capteur C.11 peut être simple ou multiple, assurant la fonction de prise proprement dite jusqu'à ce que l'objet 3.7 soit au voisinage du sommet 0 du repère de commande OXYZ du préhenseur 1.

En affectant conformément à l'invention à chaque capteur $C_i$ une action $A_i$ et une masse élémentaire $m_i$, on voit qu'il est important que les actions résultantes se composent aisément en un torseur de sommet O. Ceci est réalisé si le centre de gravité desdites masses fictives est en 0.

On notera au passage que, l'action de fermeture des doigts intervenant après toute la phase d'approche, les capteurs situés sur ces doigts mobiles par rapport au corps du préhenseur 1 n'affectent pas le fonctionnement de l'ensemble lors de la phase d'approche.

Le procédé de commande selon l'invention permet donc de déterminer, à partir des actions élémentaires affectées aux capteurs, et pour chaque mode de fonctionnement une force et un couple. Selon le mode de fonctionnement, cette force peut résulter de forces élémentaires colinéaires ou perpendiculaires aux directions de détection des capteurs proximétriques correspondants. Il en résulte un couple et une force dans le repère de commande OXYZ. Lorsque la réponse des capteurs est en $1/x^2$, la force exercée sur le mobile 1 est du type pseudogravitique selon les réponses des capteurs en face des objets rencontrés dans leur environnement, ces objets pouvant être vus comme positifs ou négatifs selon qu'ils sont des cibles recherchées ou des obstacles à éviter.

La commande obtenue par un tel procédé est de caractère dynamique. Elle n'est donc pas, en l'état actuel de la technique, toujours applicable de façon simple, en raison notamment des problèmes de stabilité qui peuvent se poser. C'est pourquoi, dans un deuxième niveau d'application de l'invention, on entend préciser le critère de centre de gravité qui vient d'être explicité par une condition plus forte revenant à déterminer les axes principaux d'inertie résultant des différentes masses fictives affectées aux capteurs.

L'invention consiste donc, dans sa forme la plus évoluée, à choisir comme repère de travail ou de commande $R_N$ (lié au solide ou au mobile) le repère principal d'inertie des masses virtuelles $m_i$. Les expressions :

$$\begin{cases} s = \sum m_i \cdot \vec{A_i} \\ \omega = \sum m_i \cdot \vec{O_N M_i} \wedge \vec{A_i} \end{cases}$$

où $A_i$ est l'action exercée en $M_i$, $O_N$ l'origine du repère $R_N$, $m_i$ le coefficient ou masse virtuelle de pondération, choisi tel que $\sum m_i = 1$, peuvent servir à déterminer au choix, aussi bien le torseur dynamique de commande s (les efforts fictifs auxquels est soumis le solide) que le torseur cinématique de commande $\omega$ (consignes de vitesse). Ces torseurs constituant des ordres de commande sont alors automatiquement définis par leurs éléments de réduction en $O_N$ et exprimés dans le repère $R_N$.

La commande effective est calculée ensuite par l'intermédiaire du Jacobien reliant les vitesses ou efforts généralisés (dépendant de l'emplacement des actionneurs du mobile) aux torseurs exprimés dans le repère $R_N$. Cette dernière partie est indépendante de la détermination des torseurs de commande à partir des actions affectées aux capteurs. Dans certains cas, une disposition particulière des actionneurs revient seulement à simplifier ce changement de coordonnées.

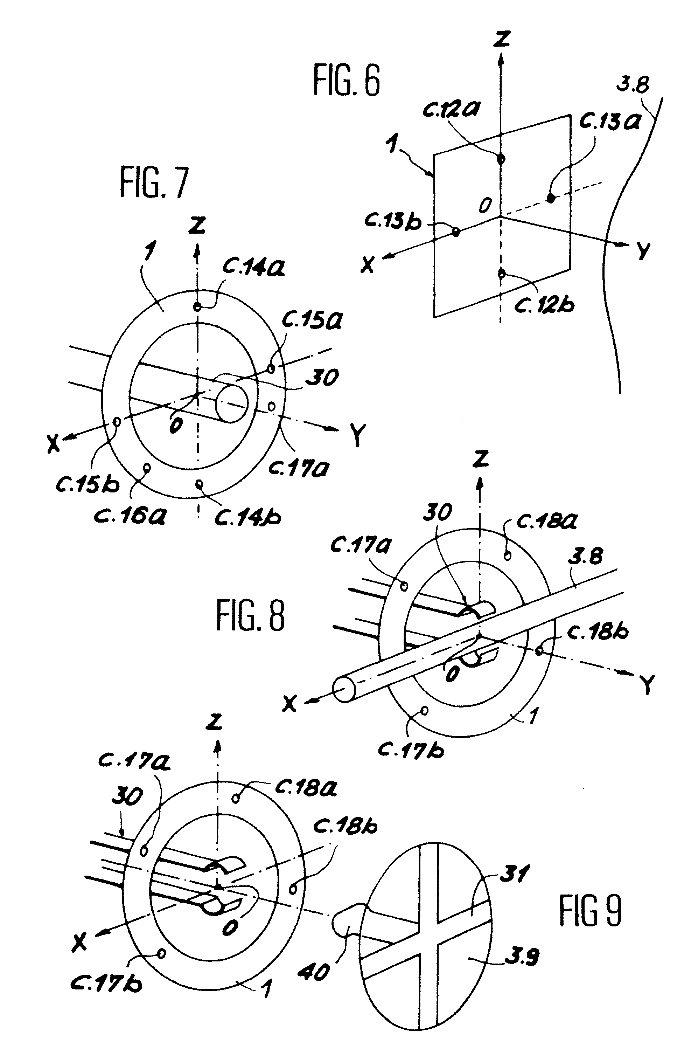

On se reportera maintenant à la figure 6 qui représente un autre cas élémentaire d'application du procédé de commande à l'aide de capteurs proximétriques locaux selon l'invention. Un mobile 1, représenté ici comme un carré, comporte deux paires de capteurs C.12a -C.12b et C.13a -C.13b, placés symétriquement par rapport à un point 0 et sur des axes OZ et OX situés dans le plan du mobile et constituant avec un dernier axe OY un trièdre OXYZ. Ce système permet la réalisation d'une fonction de poursuite en asservissement de distance, et aussi d'une fonction de dégauchissage dans l'espace. Cette deuxième fonction est réalisée par la rotation du mobile autour de l'axe OZ commandée à partir de la paire de capteurs C.13a et C.13b et par la rotation du mobile autour de l'axe OX commandée à partir de la paire de capteurs C.12a et C.12b. La distance moyenne à un obstacle dérivée de la réponse de ces quatre capteurs permet d'asservir le mobile 1 à rester à une distance moyenne de consigne par rapport à une surface 3.8. C'est un tel système qui est référencé en C.11 sur la figure 5 et permet de réaliser le dégauchissage de tout le préhenseur 1 vis-à-vis de la surface frontale de l'objet à saisir 3.7.

On se reportera maintenant à la figure 7 qui illustre un cas d'application de l'invention dans le prolongement du cas de la figure 6.

Dans ce cas, un anneau 1, traversé par un organe effecteur 30, est équipé selon l'invention de quatre capteurs proximétriques C.14a, C.14b, et C.15a, C.15b. La paire de capteurs C.14a et C.14b peut être utilisée pour commander une rotation de l'anneau 1 autour de l'axe OX, ou un déplacement de l'anneau parallèlement à l'axe OY. De même, la paire de capteurs C.15a et C.15b peut être utilisée pour commander une rotation de l'anneau autour de l'axe OZ, ou un déplacement de l'anneau parallèlement à l'axe OY. En pratique, on peut n'utiliser que trois capteurs pour obtenir ces actions, ces capteurs étant disposés en C.14a, C.16a, et C.17a, aux sommets d'un triangle équilatéral. L'intérêt d'un tel anneau multicapteurs est de permettre l'obtention d'une fonction supplémentaire d'orientation autour de l'axe OY.

On se reportera maintenant à la figure 8 pour illustrer un cas d'application de l'invention dans le prolongement du cas de la figure 7. Selon cette figure 8, la cible 3.8 est linéaire, matérialisée par exemple par un tube. L'organe effecteur 30 est, par exemple, une pince ou une cisaille, centrée selon OZ et, également, orientée de sorte que OX soit parallèle au tube 3.8. Pour cela, on place sur un anneau 1 associé à la pince 30 des capteurs C.17a et C.17b utilisés en mode différentiel de centrage asservi à une distance convenable de la cible 3.8. De même des capteurs C.18a et C.18b également placés sur l'anneau 1 sont utilisés en mode différentiel de centrage asservi à la même distance de la cible 3.8.

Comme l'illustre la figure 9, ce type d'anneau 1 à quatre capteurs proximétriques C.17a, C.17b, C.18a et C.18b permet de centrer et d'orienter son organe effecteur 30 sur une cible 3.9 marquée par une croix 31 tracée sur sa surface. On réalise alors un dégauchissage et un asservissement en distance, ainsi que l'orientation de l'organe 30 par rapport au marquage en croix. Cette disposition peut être utilisée afin de commander la capture d'une pièce de préhension 40 portée par un mobile 3.9 tel qu'un satellite.

**Revendications**

1. Procédé de commande des mouvements d'un mobile sensible et actif, mû par au moins deux actionneurs, par rapport à un environnement local passif inconnu, selon au moins un mode de fonctionneme adapté à le tâche à réaliser, consistant, pour chaque mode de fonctionnement :

   - à utiliser au moins deux capteurs proximétriques directionnels $C_i$, d'origine $M_i$, montés en un emplacement connu du mobile et délivrant, après traitement, un signal $f(x)$ représentatif de la distance x séparant l'origine du capteur d'un obstacle de l'environnement local, selon une direction de détection $Y_i$ connue par rapport au mobile ; et à affecter à chacun de ces capteurs $C_i$ un coefficient $m_i$, assimilable à une masse virtuelle de pondération de l'action de ce capteur, et une direction virtuelle confondue avec la direction de détection $Y_i$ ou perpendiculaire à cette direction ;
   - à utiliser au moins l'un desdits actionneurs : et à affecter au mobile un repère de commande UXYZ, de sommet O et d'axes OX,OY et OZ, du ou des actionneurs utilisés ;
   - à déterminer, pour chacun des capteurs $C_i$, une action élémentaire virtuelle représentée par un vecteur $\vec{A_i}$ dont le module est défini par la relation $A_i = m_i \cdot f(x)$, dont le point d'application est l'origine $M_i$ de ce capteur, et dont la direction est ladite direction virtuelle ;
   - à élaborer, à partir des actions élémentaires virtuelles $\vec{A_i}$ ainsi déterminées, un ordre de commande du ou des actionneurs utilisés, représenté par un torseur de commande dont les éléments de réduction au sommet O du repère de commande OXYZ sont donnés par les relations :

$$\sum m_i \cdot \vec{A_i}$$
$$\sum m_i \cdot \vec{A_i} \wedge \vec{OM_i},$$

où $\wedge$ reprèsente le produit vectoriel,

   - à appliquer cet ordre de commande à un ou aux actionneurs utilisés.

2. Procédé selon la revendication 1, caractérisé en ce que, pour chaque mode de fonctionnement, les coefficients $m_i$ affectés à chacun des capteurs $C_i$ sont choisis de telle sorte que leur centre de gravité virtuel O défini par $\sum m_i x \vec{OM_i}$ coïncide avec le sommet O du repère de commande OXYZ du mobile.

3. Procédé selon la revendication 1, caractérisé en ce que, pour chaque mode de fonctionnement, les coefficients $m_i$ affectés à chacun des capteurs $C_i$ sont choisis de telle sorte qu'ils définissent un repère principal d'inertie qui coïncide avec le repère de commande OXYZ du mobile.

4. Procédé selon l'une quelconque des revendications 1 à 3, caractérisé en ce que ce signal $f(x)$ est une fonction monotone de la distance, toujours positive ou négative, correspondant à une attraction ou une répulsion.

5. Procédé selon l'une quelconque des revendications 1 à 3, caractérisé en ce que le signal $f(x)$ est une fonction changeant de signe pour une distance donnée du capteur $C_i$ par rapport à un obstacle de l'environnement local, correspondant à un asservissement de distance.

6. Procédé selon l'une quelconque des revendications 1 à 5, caractérisé en ce que, pour chaque mode de fonctionnement, les signaux $f(x)$ et les directions des actions élémentaires $A_i$ sont les mêmes pour chacun des capteurs $C_i$.

**Claims**

1. Process for the control of the movements of a sensitive, active moving body, moved by at least two actuators, relative to a local, passive environment, in accordance with at least one operating mode adapted to the task to be performed and comprising, for each operating mode:

   using at least two directional proximetric transducers $C_i$ of origin $M_i$, fitted at a known location on the moving body and supplying, following processing, a signal $f(x)$ representative of the distance x separating the origin of the sensor from an obstacle in the local environment, in accordance with a known detection direction $Y_i$ with respect to the moving body; and allocating to each of the sensors $C_i$ a

coefficient $m_i$, which can be likened to a virtual weighting mass of the action of said sensor, and a virtual direction coinciding with the detection direction $Y_i$ or perpendicular thereto;

using at least one of the said actuators; and allocating to the moving body a control reference OXYZ of apex O and axes OX, OY and OZ of the actuator or actuators used;

determining, for each of the sensors $C_i$, an elementary virtual action represented by a vector $\vec{A_i}$, whose modulus is defined by the relation $\vec{A_i} = m_i \cdot f(x)$, whose application point is the origin $M_i$ of said sensor and whose direction is said virtual direction;

producing from the thus determined elementary virtual actions $\vec{A_i}$, a control instruction of the actuator or actuators used, represented by a control torsor, whose reduction elements at the apex O of the control reference OXYZ are given by the relations:

$$\sum m_i \cdot \vec{Ai}$$
$$\sum m_i \cdot \vec{A_i} \wedge \vec{OM_i}$$

in which $\wedge$ represents the vectorial product,

applying said control instruction to one or the actuators used.

2. Process according to claim 1, characterized in that, for each operating mode, the coefficients $m_i$ allocated to each of the sensors $C_i$ are chosen in such a way that their virtual gravity centre O defined by $\sum m_i x \vec{OM_i}$ coincides with the apex O of the control reference OXYZ of the moving body.

3. Process according to claim 1, characterized in that, for each operating mode, the coefficients $m_i$ allocated to each of the sensors $C_i$ are chosen in such a way that they define a main inertia reference coinciding with the control reference OXYZ of the moving body.

4. Process according to any one of the claims 1 to 3, characterized in that said signal f(x) is a monotonic function of the distance always positive or negative, corresponding to an attraction or a repulsion.

5. Process according to any one of the claims 1 to 3, characterized in that the signal f(x) is a function which changes sign for a given distance of the sensor $C_i$ from an obstacle in the local environment and corresponding to a distance control.

6. Process according to any one of the claims 1 to 5, characterized in that, for each operating mode, the signals f(x) and the directions of the elementary actions $A_i$ are the same for each of the sensors $C_i$.

## Patentansprüche

1. Verfahren zum Steuern der Bewegungen eines beweglichen, fühlenden und aktiven Körpers, der von wenigstens zwei Stellgliedern bewegt wird, in einer lokalen, passiven, unbekannten Umgebung entsprechend einem Betriebsmodus, der an die auszuführende Aufgabe angepaßt ist, welches darin besteht, für jeden Betriebsmodus:

   - wenigstens zwei Richtungsabstandsfühler $C_i$ mit Ursprung $M_i$ zu verwenden, die an einer bekannten Stelle des beweglichen Körpers montiert sind und nach Bearbeitung ein Signal f(x) erzeugen, das den Abstand x angibt, der den Ursprung des Fühlers von einem Hindernis der lokalen Umgebung entlang einer bekannten Detektionsrichtung $Y_i$ bezüglich des beweglichen Körpers trennt; und jeden der Fühler $C_i$ mit einem Koeffizienten $m_i$, der an eine virtuelle Masse der Wägung der Fühleraktion anpassbar ist, und mit einer virtuellen Richtung zu versehen, die mit der Detektionsrichtung $Y_i$ zusammenfällt oder senkrecht dazu ist;
   - wenigsten eines der Stellglieder zu verwenden; und den beweglichen Körper mit einer Steuerungsmarkierung OXYZ mit dem Scheitel O und den Achsen OX, OY und OZ des verwendeten Stellglieds oder der verwendeten Stellglieder zu versehen;
   - für jeden der Fühler $C_i$ eine virtuelle Elementaraktion zu definieren, die durch einen Vektor $\vec{A_i}$ dargestellt wird, dessen Betrag durch die Beziehung $A_i = m_i \cdot f(x)$ definiert wird, dessen Ansatzpunkt der Ursprung $M_i$ dieses Fühlers ist und dessen Richtung die virtuelle Richtung ist;
   - ausgehend von den so bestimmten elementaren Aktionen $\vec{A_i}$ eine Steuerungsordnung des oder der verwendeten Stellglieder zu erarbeiten, die durch einen Steuerungstensor dargestellt wird, dessen Reduktionselemente auf dem Scheitel O der Steuerungsmarkierung OXYZ gegeben sind durch die Relationen:

$$\Sigma m_i \cdot \vec{A_i}$$

$$\Sigma m_i \cdot \vec{A_i} \wedge \vec{OM_i},$$

wobei $\wedge$ das Vektorprodukt darstellt;

diese Steuerungsordnung auf das oder die verwendeten Stellglieder anzuwenden.

2. Verfahren nach Anspruch 1, dadurch gekennzeichnet, daß für jeden Betriebsmodus die jedem der Fühler $C_i$ zugewiesenen Koeffizienten $m_i$ so ausgewählt werden, daß ihr durch $\Sigma m_i \cdot \vec{A_i} \wedge \vec{OM_i}$ bestimmter Schwerpunkt mit der Scheitel O der Steuerungsmarkierung OXYZ des beweglichen Körpers zusammenfällt.

3. 2. Verfahren nach Anspruch 1, dadurch gekennzeichnet, daß für jeden Betriebsmodus die jedem der Fühler $C_i$ zugewiesenen Koeffizienten $m_i$ so ausgewählt werden, daß sie eine Hauptträgheitsmarkierung bilden, die mit der Steuerungsmarkierung OXYZ des beweglichen Körpers zusammenfällt.

4. Verfahren nach einem der Ansprüche 1 bis 3, dadurch gekennzeichnet, daß das Signal $f(x)$ eine monotone Funktion des Abstands und ständig positiv oder negativ entsprechend einer Anziehung oder einer Abstoßung ist.

5. Verfahren nach einem der Ansprüche 1 bis 3, dadurch gekennzeichnet, daß das Signal $f(x)$ eine Funktion ist, die das Vorzeichen für einen vorgegebenen Abstand des Fühlers $C_i$ von dem Hindernis in der lokalen Umgebung wechselt, was einer Entfernungsregelung entspricht.

6. Verfahren nach einem der Ansprüche 1 bis 5, dadurch gekennzeichnet, daß für jeden Betriebsmodus die Vorzeichen $f(x)$ und die Richtungen der Elementaraktionen $A_i$ dieselben für jeden der Fühler $C_i$ sind.

FIG. 1

FIG. 3

FIG. 2

EP 0 171 303 B1

FIG. 4

FIG. 5

EP 0 171 303 B1

FIG. 6

FIG. 7

FIG. 8

FIG 9

16